Europäisches Patentamt

European Patent Office

Office européen des brevets

(11) Numéro de publication: **0 221 814 B1**

# FASCICULE DE BREVET EUROPEEN

(45) Date de publication de fascicule du brevet: **30.09.92** (51) Int. Cl.⁵: **C09J 201/02,** C08L 65/00

(21) Numéro de dépôt: **86402319.7**

(22) Date de dépôt: **16.10.86**

Le dossier contient des informations techniques présentées postérieurement au dépôt de la demande et ne figurant pas dans le présent fascicule.

(54) **Compositions pour adhésifs thermofusibles, leur procédé de préparation et leur application à un procédé de collage de matériaux.**

(30) Priorité: **25.10.85 FR 8515837**
**10.06.86 FR 8608359**

(43) Date de publication de la demande:
**13.05.87 Bulletin 87/20**

(45) Mention de la délivrance du brevet:
**30.09.92 Bulletin 92/40**

(84) Etats contractants désignés:
**AT BE CH DE ES FR GB GR IT LI LU NL SE**

(56) Documents cités:
**EP-A- 0 150 218**
**FR-A- 1 597 727**
**GB-A- 891 643**
**US-A- 4 460 728**

(73) Titulaire: **CRAY VALLEY SA**
**Tour Total, 24 cours Michelet**
**F-92800 Puteaux(FR)**

(72) Inventeur: **Sorg, Kurt**
**21 Bulle Eglantine**
**F-95610 Eragny(FR)**
Inventeur: **Mireux, Jean-Paul**
**5 rue du Clos Riom**
**F-60870 Villers St Paul(FR)**

(74) Mandataire: **Dubost, Thierry**
**CRAY VALLEY Service Propriété Industrielle**
**Parc Technologique ALATA BP 22**
**F-60550 Verneuil-en-Halatte(FR)**

## Description

On connaît déjà des procédés de collage de matériaux divers, faisant appel à des résines réticulables sous l'action de la chaleur. Ces compositions se présentent généralement sous forme de solutions ou d'émulsions d'une résine réticulable et contiennent comme constituants complémentaires au moins un agent de réticulation et souvent un catalyseur de réticulation.

Toutefois, le recours à des techniques d'enduction et de collage à partir de solutions adhésives présente certains inconvénients importants.

Ainsi, lors de la mise en oeuvre industrielle de ces procédés, il convient de prévoir des installations onéreuses et encombrantes pour la récupération du solvant. En outre, la plupart des solvants sont toxiques ou inflammables, ce qui entraîne la mise en place de mesures de sécurité astreignantes. Enfin, il est malaisé d'éliminer les dernières traces de solvant.

L'utilisation d'adhésifs sous forme d'émulsions présente également des inconvénients. Ainsi, il est difficile de réaliser des émulsions de grande stabilité et, par voie de conséquence, le stockage de ces adhésifs pose de nombreux problèmes. En outre, la durée de séchage est assez longue et peu compatible avec les cadences industrielles actuelles. Enfin ces adhésifs sont très sensibles au froid.

On connaît également, par le brevet FR-A-1.597.727, des adhésifs à base de polymères du norbornène ou de l'un de ses dérivés, le caractère d'adhérence étant obtenu à la suite d'un traitement thermique. Ces polymères peuvent être appliqués soit seuls soit en mélange avec des charges telles que de la silice, ou encore avec des additifs plastifiants ou assouplissants. Ils sont placés entre les surfaces à coller, soit à l'état solide (poudre ou film) soit dans un solvant, puis les surfaces à coller sont chauffées et appliquées par pression l'une contre l'autre.

"Par ailleurs le brevet US-A-4.460.728 décrit des adhésifs thermofusibles non sensibles à la pression consistant en un mélange de 10 à 40 % en poids d'un copolymère d'éthylène et d'acétate de vinyle ou d'acrylate d'alkyle, de 10 à 40 % en poids de polypropylène atactique et de 20 à 50 % en poids d'une résine tackifiante compatible".

La demanderesse a maintenant mis au point des compositions et un procédé pour le collage de matériaux par la technique d'enduction tout en éliminant les inconvénients inhérents à l'emploi de solvants.

Un premier objet de la présente invention concerne donc des compositions pour adhésifs thermofusibles comprenant (A) au moins un polymère thermoélastique, (B) au moins une résine tackifiante et (C) au moins un plastifiant dudit polymère thermoélastique, caractérisées en ce que pour 100 parties en poids du mélange (A) + (B) + (C) elles comprennent :
- de 1 à 15 parties de (A) au moins un polymère du norbornène et/ou d'un dérivé du norbornène,
- de 15 à 70 parties de (B) au moins une résine tackifiante, et
- de 29 à 84 parties de (C) au moins un plastifiant du polymère (A).

Les polymères du norbornène et/ou ses dérivés entrant dans la définition des compositions selon l'invention sont bien connus. Ils possèdent généralement un poids moléculaire moyen en poids au moins égal à 100.000 et pouvant aller jusqu'à 3.000.000. Il est particulièrement avantageux, du point de vue de la préparation de la composition selon l'invention, d'utiliser un polymère de norbornène en poudre tel qu'obtenu par exemple par le procédé décrit dans le brevet FR-A-2.265.774.

Les résines tackifiantes entrant dans la définition des compositions selon l'invention sont choisies notamment parmi les polyterpènes, les collophanes et esters de collophane ainsi que leurs dérivés hydrogénés, les ethers polyvinyliques et les résines de pétrole. Les résines de pétrole utilisables dans les compositions selon l'invention sont des résines préparées à partir de fractions d'hydrocarbures provenant du craquage à la vapeur de naphta, tel que d'une part des coupes aromatiques contenant au moins un monomère choisi parmi le styrène et ses dérivés, les vinyltoluènes et l'allylbenzène et d'autre part des coupes aliphatiques contenant au moins un monomère ayant de 5 à 6 atomes de carbone tel que le cyclopentadiène et ses dérivés et le cyclohexadiène.

Les plastifiants entrant dans la définition des compositions selon l'invention sont choisis parmi d'une part les huiles semi-aliphatiques, les polyisobutylènes de très bas poids moléculaire et les huiles pétrolières aromatiques, naphténiques ou paraffiniques, les alkylbenzènes, et d'autre part les esters dérivés d'acides organiques saturés tels que les phtalates, adipates, sébacates et azélates d'alkyle. A titre d'exemples de ces derniers on peut citer les phtalates de diéthyle, de dibutyle, de dicyclohexyle, de diéthylhexyle, de dioctyle, de didécyle, de butyléthylhexyle, les adipates de dibutyle, de dioctyle, de diisooctyle, les sébacates de dibutyle, de dioctyle, de diisooctyle, les azélates de dioctyle et de diisooctyle.

Les compositions selon l'invention peuvent en outre comprendre, pour 100 parties en poids du mélange (A) + (B) + (C) tel que décrit précédemment:
- jusqu'à 30 parties d'au moins une charge minérale telle que notamment silice, alumine, silicates, aluminates et silico-aluminates minéraux, talc, etc, et/ou
- jusqu'à 2 parties d'au moins un antioxydant choisi notamment parmi les 2-6 ditertiobutylparacrésol, bishydroxyanisol, 2,2' thiodiéthyl bis (3-(3,5 ditertiobutyl-4-hydroxyphenyl) propionate, tetrakis (méthylène 3-(3',5'-ditertiobutyl-4'-hydroxyphenyl) propionate) méthane, 2,4 bis (n-octylthio-6(4-hydroxy 3,5-ditertiobutylanilino)1,3,5 triazine et ditertiobutyl 3,5 hydroxy-4 phényl-3 propionate.

Les compositions décrites précédemment peuvent être encore améliorées lorsqu'elles comprennent en outre, pour 100 parties en poids du mélange (A) + (B) + (C), jusqu'à 40 parties en poids d'au moins un polymère (D) présentant un caractère élastomérique au moins partiel et choisi parmi (D₁ les polymères triséquencés à base d'un monomère styrénique et d'un diène et (D₂) les copolymères comprenant de 55 à 85 % en poids de motifs dérivés de l'éthylène et de 15 à 45 % en poids de motifs dérivés d'au moins un comonomère insaturé choisi parmi les (méth)acrylates d'alkyle ayant de 4 à 22 atomes de carbone et les esters de vinyle d'acides ayant de 1 à 22 atomes de carbone.

Les polymères triséquencés (D₁) sont des polymères à blocs de structure S-D-S dans laquelle S est un monomère styrénique tel que notamment le styrène ou 1' -méthylstyrène et D est un diène tel que notamment le butadiène ou l'isoprène. Ces polymères ont un caractère élastomérique fortement prononcé et sont bien connus notamment dans l'industrie caoutchoutière. Les copolymères d'éthylène (D₂) possèdent également un caractère élastomérique prononcé, bien que différent de celui des polymères (D₁), dû à l'importance de la fraction en poids du comonomère. Parmi les comonomères insaturés présents dans les polymères (D₂) on peut citer notamment les acrylates de méthyle, éthyle et n-butyle, le méthacrylate de méthyle, l'acétate de vinyle.

Selon un second objet de la présente invention, les compositions décrites précédemment sont généralement préparées en mélangeant efficacement leurs divers constituants à une température comprise entre 110°C et 220°C. En particulier lorsqu'elles comprennent un polymère (D), leur préparation s'effectue de préférence selon un procédé en deux étapes. Au cours de la première étape, de courte durée et généralement effectuée sous intense agitation à une température comprise entre 180°C et 220°C, sont mélangés le polymère de norbornène (A), son plastifiant (C) et au moins une partie de la résine tackifiante (B). A l'issue de cette première étape, le mélange homogène obtenu est refroidi. Au cours de la seconde étape, de durée plus longue que la première et généralement effectuée sous agitation modérée à une température comprise entre 110°C et 140°C, on ajoute le polymère (D) et, le cas échéant, le complément de la résine tackifiante (B) et les antioxydants au mélange obtenu dans la première étape.

A température ambiante, les compositions selon l'invention se présentent généralement sous une forme solide et/ou pâteuse qui peut être stockée durant une période de temps prolongée sans aucune altération de ses propriétés. Lors de son utilisation, la composition selon l'invention est portée à une température suffisante pour la rendre fluide. Ceci constitue une différence importante par rapport au mode d'application des produits décrits dans le brevet FR-A-1.597.727.

Un troisième objet de la présente invention concerne l'application des compositions décrites précédemment à un procédé de collage de matériaux, ledit procédé consistant à enduire la surface d'au moins l'un des matériaux au moyen d'au moins une telle composition préalablement portée à une température de 90° à 200°C, puis à appliquer l'autre matériau sur ladite surface.

Les matériaux soumis au procédé de collage selon l'invention peuvent être de même nature ou de natures différentes. Ils peuvent être choisis notamment parmi le bois, les métaux, les textiles tissés ou non tissés, le verre, la porcelaine, la céramique, le carton, le papier, la pierre, le béton et les matières plastiques. Parmi les matières plastiques concernées on peut citer notamment polyuréthane, polyéthylène, caoutchouc éthylène-propylène-diène, polyester, polychlorure de vinyle, etc.

Le procédé de collage selon l'invention est capable de répondre de manière efficace à de nombreux besoins industriels, tels que notamment l'assemblage et la fabrication d'articles d'hygiène infantile tels que les couches-culottes pour bébés et d'articles d'hygiène féminine tels que les serviettes périodiques.

Lorsque la composition thermofusible utilisée comprend un polymère (D), il est préférable qu'elle soit portée, préalablement à l'enduction, à une température choisie dans une gamme comprise entre 110°C et 140°C. Pour réaliser l'enduction des surfaces des matériaux à coller, la demanderesse préfère procéder suivant la technique connue de l'enduction au fondu telle qu'elle est pratiquée pour la mise en oeuvre des colles de fusion ou "hot-melts". A cet effet, elle recourt généralement à une extrudeuse équipée d'une filière plate appropriée. Bien entendu, cette enduction peut être réalisée par d'autres techniques conventionnelles, telles que par exemple l'enduction au rouleau ou à la lame.

La quantité de composition adhésive déposée peut varier entre de larges limites suivant la nature des matériaux à coller. En général, on peut appliquer de 10 à 200 g de composition adhésive par mètre carré de surface à encoller. Par exemple pour l'assemblage d'un voile non-tissé de polyester sur du polyéthylène en vue de la confection d'une couche-culotte pour bébé on peut appliquer de 0,2 à 0,8 g de composition adhésive par couche. Le procédé selon l'invention peut être aisément rendu continu lorsqu'on désire coller des objets de très grande longueur tels que des bandes continues.

Si le matériau adhésivé n'est pas destiné à être appliqué directement sur le matériau auquel il doit être associé, il convient généralement de protéger sa face rendue adhésive par application d'une pellicule provisoire pelable telle que, par exemple, un papier siliconé. L'objet adhésivé ainsi protégé peut être conservé durant une période de temps prolongée sans que l'on constate une perte appréciable de ses propriétés adhésives.

Les exemples suivants sont donnés à titre purement illustratif et ne limitent en rien la portée de la présente invention.

## EXEMPLE 1

On réalise la composition suivante dans laquelle les quantités sont exprimées en parties en poids :

| | |
|---|---|
| polynorbornène | 8,1 |
| plastifiant (huile naphténique) | 46 |
| tackifiant (résine de pétrole) | 27 |
| kaolin | 18,5 |
| 2,2'thio diéthyl bis (3-(3,5 ditertiobutyl-4-hydroxyphenyl) propionate | 0,2 |
| 2,4 bis(n-octylthio-6-(4-hydroxy 3,5 ditertiobutyl anilino) 1,3,5 triazine | 0,2 |

Le polynorbornène utilisé est un produit en poudre de poids moléculaire moyen en poids égal à 2.000.000, commercialisé par la demanderesse sous la marque NORSOREX. La résine de pétrole utilisée est une résine obtenue par copolymérisation d'une coupe aromatique et de terpènes, commercialisée par la demanderesse sous la marque NORSOLENE M 1080.

Cette composition, obtenue par mélange des divers constituants à la température de 130°C, est appliquée par cylindre à 190°C et à raison de 100 g/m² pour le collage du bois. Elle donne des résultats très satisfaisants dans cette utilisation.

## EXEMPLE 2

On réalise la composition suivante dans laquelle les quantités sont exprimées en parties en poids :

| | |
|---|---|
| polynorbornène | 10 |
| plastifiant 1 (polyisobutylène) | 14 |
| plastifiant 2 (huile naphténique) | 20 |
| tackifiant (résine de pétrole aliphatique hydrogénée) | 55 |
| 2,2'thio diéthyl bis (3-(3,5 ditertiobutyl-4-hydroxyphenyl) propionate | 0,4 |
| ditertiobutyl 3,5 hydroxy-4 phenyl-3 propionate | 0,3 |
| 2,4 bis(n-octylthio-6-(4-hydroxy 3,5 ditertiobutyl anilino) 1,3,5 triazine | 0,3 |

La résine de pétrole aliphatique hydrogénée est une résine commercialisée par la société ESSO sous la marque ESCOREZ 5300. Cette composition, obtenue par mélange des divers constituants à la température de 160°C, est appliquée, au moyen d'un applicateur à buse, à 110°C et à raison de 28 g/m² pour le collage du polyéthylène dans des articles d'hygiène tels que les couches pour bébés. Elle donne des résultats très satisfaisants dans cette application.

## EXEMPLE 3

On réalise la composition suivante dans laquelle les quantités sont exprimées en parties en poids :

| polynorbornène | 6 |
|---|---|
| plastifiant 1 (polyisobutylène) | 20 |
| plastifiant 2 (huile naphténique) | 6 |
| tackifiant 1 (collophane estérifiée) | 34 |
| tackifiant 2 (polyalphaméthylstyrène) | 33 |
| 2,6-ditertiobutylparacrésol | 0,5 |
| bishydroxyanisol | 0,5 |

Cette composition, obtenue par mélange des divers constituants à la température de 160°C, est déposée sur papier siliconé à une température voisine de 140°C au moyen d'un applicateur à buse, et donne entière satisfaction dans des articles d'hygiène féminine tels des serviettes périodiques.

## EXEMPLE 4

On réalise la composition suivante dans laquelle les quantités sont exprimées en parties en poids :

| polynorbornène | 1,8 |
|---|---|
| plastifiant (huile naphténique) | 18,2 |
| tackifiant n° 1 | 37 |
| tackifiant n° 2 | 15 |
| polymère $D_1$ | 27 |
| antioxydants | 1 |

Le polynorbornène utilisé est un produit en poudre de poids moléculaire moyen en poids égal à 2.000.000, commercialisé par la demanderesse sous la marque NORSOREX F. Le tackifiant n° 1 utilisé est une résine de pétrole aliphatique hydrogénée commercialisée par la société ESSO sous la marque ESCOREZ 5765. Le tackifiant n° 2 utilisé est un copolymère de vinyltoluène, styrène et - méthylstyrène commercialisé sous la marque KRISTALLEX F 120. Le polymère $D_1$ utilisé est un copolymère triséquencé styrène-butadiène-styrène commercialisé par la société SHELL sous la marque CARIFLEX TR 1102. Le système antioxydant utilisé est un mélange de quatre composés commercialisés par la société CIBA-GEIGY : 0,5 partie IRGANOX 1076, 0,1 partie IRGANOX 1035, 0,05 partie IRGANOX 565 et 0,35 partie IRGANOX PS 800.

Cette composition est préparée en deux étapes :
- dans une première étape on mélange à 200°C, pendant environ 10 minutes et à 2000 tours/minute, le plastifiant, le polynorbornène, une partie du tackifiant et une partie du polymère styrénique, puis
- dans une seconde étape, la composition obtenue à l'issue de la première étape est mélangée à 130°C, pendant environ 90 minutes et à 400 tours/minute avec le polymère $D_1$, les antioxydants, le complément du tackifiant et le complément du polymère styrénique.

La composition ainsi obtenue possède une viscosité de 84 poises à 175°C et est utilisable comme adhésif thermofusible.

## EXEMPLE 5

On réalise la composition suivante dans laquelle les quantités sont exprimées en parties en poids :

| polynorbornène | 1,8 |
|---|---|
| plastifiant (huile naphténique) | 26,2 |
| tackifiant | 50 |
| polymère $D_1$ | 21 |
| antioxydants | 1 |

Le polynorbornène, le polymère $D_1$ et le système antioxydant utilisés sont les mêmes que ceux précisés à l'exemple 4. Le tackifiant utilisé est une résine de pétrole aliphatique hydrogénée commercialisée par la société ESSO sous la marque ESCOREZ 5320.

La composition ainsi obtenu présente une viscosité de 27 poises à 175°C. Elle est utilisée de façon satisfaisante pour la confection de couches-culottes pour bébé :
- d'une part pour le collage de l'élastique (caoutchouc éthylène-propylènediène ou polyuréthane sur polyéthylène), et
- d'autre part comme adhésif thermofusible de positionnement destiné à la serviette (assemblage d'un voile non-tissé de polyester sur le polyéthylène).

**Revendications**

1. Composition pour adhésif thermofusible comprenant (A) au moins un polymère thermoélastique, (B) au moins une résine tackifiante et (C) au moins un plastifiant dudit polymère thermoélastique, caractérisée en ce que pour 100 parties en poids du mélange (A) + (B) + (C) elle comprend:
- de 1 à 15 parties de (A) au moins un polymère du norbornène et/ou d'un dérivé du norbornène,
- de 15 à 70 parties de (B) au moins une résine tackifiante, et
- de 29 à 84 parties de (C) au moins un plastifiant du polymère (A).

2. Composition pour adhésif thermofusible selon la revendication 1, caractérisée en ce que le polymère (A) présente un poids moléculaire moyen en poids de 100.000 à 3.000.000.

3. Composition pour adhésif thermofusible selon l'une des revendications 1 et 2, caractérisée en ce que la résine tackifiante (B) est choisie parmi les polyterpènes, les collophanes et esters de collophane ainsi que leurs dérivés hydrogènés, les ethers polyvinyliques et les résines de pétrole.

4. Composition pour adhésif thermofusible selon l'une des revendications 1 à 3, caractérisée en ce que le plastifiant (C) est choisi parmi les huiles semi-aliphatiques, les polyisobutylènes de très bas poids moléculaire, les huiles pétrolières aromatiques, naphténiques ou paraffiniques, les alkylbenzènes et les esters dérivés d'acides organiques saturés.

5. Composition pour adhésif thermofusible selon lune des revendications 1 à 4, caractérisée en ce qu'elles comprend en outre, pour 100 parties en poids du mélange (A) + (B) + (C), jusqu'à 30 parties en poids d'au moins une charge minérale.

6. Composition pour adhésif thermofusible selon l'une des revendications 1 à 5, caractérisée en ce qu'elle comprend en outre, pour 100 parties en poids du mélange (A) + (B) + (C), jusqu'à 2 parties d'au moins un antioxydant.

7. Composition pour adhésif thermofusible selon l'une des revendications 1 à 6, caractérisée en ce qu'elle comprend en outre, pour 100 parties en poids du mélange (A) + (B) + (C), jusqu'à 40 parties en poids d'au moins un polymère (D) présentant un caractère élastomérique au moins partiel et choisi parmi (D$_1$) les polymères triséquencés à base d'un monomère styrénique et d'un diène et (D$_2$) les copolymères comprenant de 55 à 85 % en poids de motifs dérivés de l'éthylène et de 15 à 45 % en poids de motifs dérivés d'au moins un comonomère insaturé choisi parmi les (méth)acrylates d'alkyle ayant de 4 à 22 atomes de carbone et les esters de vinyle d'acides carboxyliques ayant de 1 à 22 atomes de carbone.

8. Procédé de préparation d'une composition selon l'une des revendications 1 à 7, caractérisé en ce que les constituants de ladite composition sont mélangés efficacement à une température comprise entre 110°C et 220°C.

9. Procédé selon la revendication 8 pour la préparation d'une composition selon la revendication 7, caractérisé en ce qu'au cours d'une première étape, de courte durée et effectuée sous intense agitation à une température comprise entre 180°C et 220°C, sont mélangés le polymère de norbornène (A), son plastifiant (C) et au moins une partie de la résine tackifiante (B), puis le mélange homogène obtenu est refroidi, puis au cours d'une seconde étape, de durée plus longue que la première et effectuée sous agitation modérée à une température comprise entre 110°C et 140°C, on ajoute le polymère (D) et, le cas échéant, le complément de la résine tackifiante (B).

10. Procédé de collage de matériaux, caractérisé en ce qu'il consiste à enduire la surface d'au moins l'un des matériaux au moyen d'au moins une composition selon l'une des revendications 1 à 7, préalablement portée à une température de 90°C à 200°C, puis à appliquer l'autre matériau sur ladite surface.

**11.** Procédé de collage de matériaux selon la revendication 10, caractérisé en ce que la composition est utilisée à raison de 10 à 200 g par mètre carré de surface.

**Claims**

1. Hot-melt adhesive composition comprising (A) at least one thermoelastic polymer, (B) at least one tackifying resin and (C) at least one plasticiser for the said thermoelastic polymer, characterized in that it comprises, per 100 parts by weight of the mixture (A) + (B) + (C):
   - from 1 to 15 parts of (A) at least one polymer of norbornene and/or of a norbornene derivative,
   - from 15 to 70 parts of (B) at least one tackifying resin, and
   - from 29 to 84 parts of (C) at least one plasticizer of polymer (A).

2. Hot-melt adhesive composition according to Claim 1, characterized in that polymer (A) has a weight average molecular weight of 100,000 to 3,000,000.

3. Hot-melt adhesive composition according to either of Claims 1 and 2, characterized in that the tackifying resin (B) is chosen from polyterpenes, rosins and rosin esters and their hydrogenated derivatives, polyvinyl ethers and petroleum resins.

4. Hot-melt adhesive composition according to one of Claims 1 to 3, characterized in that the plasticizer (C) is chosen from semialiphatic oils, polyisobutylenes of very low molecular weight, aromatic, naphthenic or paraffinic petroleum oils, alkylbenzenes and esters derived from saturated organic acids.

5. Hot-melt adhesive composition according to one of Claims 1 to 4, characterized in that it further comprises, per 100 parts by weight of the mixture (A) + (B) + (C), up to 30 parts by weight of at least one inorganic filler.

6. Hot-melt adhesive composition according to one of Claims 1 to 5, characterized in that it further comprises, per 100 parts by weight of the mixture (A) + (B) + (C), up to 2 parts of at least one antioxidant

7. Hot-melt adhesive composition according to one of Claims 1 to 6, characterized in that it further comprises, per 100 parts by weight of the mixture (A) + (B) + (C), up to 40 parts by weight of at least one polymer (D) at least partly of an elastomeric nature and chosen from (D$_1$) triblock polymers derived from a styrene monomer and a diene and (D$_2$) copolymers comprising from 55 to 85 % by weight of units derived from ethylene and from 15 to 45 % by weight of units derived from at least one unsaturated comonomer chosen from alkyl (meth)acrylates containing from 4 to 22 carbon atoms and vinyl esters of carboxylic acids containing from 1 to 22 carbon atoms.

8. Process for the preparation of a composition according to one of Claims 1 to 7, characterized in that the components of the said composition are mixed efficiently at a temperature of between 110°C and 220°C.

9. Process according to Claim 8, for the preparation of a composition according to Claim 7, characterized in that, during a first step which is of short duration and is carried out with intensive mixing at a temperature between 180°C and 220°C, the norbornene polymer (A), its plasticizer (C) and at least a part of the tackifying resin (B) are mixed together, then the homogeneous mixture obtained is cooled and then, during a second step which lasts longer than the first step ans is carried out with moderate mixing at a temperature of between 110°C and 140°C, the polymer (D) and, if appropriate, the remainder of the tackifying resin (B) are added

10. Process for bonding materials, characterized in that it consists in coating the surface of at least one of the materials by means of at least one composition according to one of Claims 1 to 7, heated beforehand to a temperature of 90°C to 200°C, and in then applying the other material onto the said surface.

**11.** Process for bonding materials according to Claim 10, characterized in that the composition is used at a rate of 10 to 200 g per square metre of surface area.

**Patentansprüche**

**1.** Zusammensetzung für Heißschmelzklebstoff, enthaltend (A) mindestens ein thermoelastisches Polymer, (B) mindestens ein klebrig machendes Harz und (C) mindestens einen Weichmacher für das genannte thermoelastische Polymer, dadurch gekennzeichnet, daß sie auf 100 Gewichtsteile der Mischung (A) + (B) + (C) enthält:
   - 1 bis 15 Teile (A) mindestens eines Norbornenpolymers, und/oder einer Norbornenverbindung,
   - 15 bis 70 Teile (B) mindestens eines klebrig machenden Harzes und
   - 29 bis 84 Teile (C) mindestens eines Weichmachers für das Polymer (A).

**2.** Zusammensetzung für Heißschmelzklebstoff, nach Anspruch 1, dadurch gekennzeichnet, daß das Polymer (A) ein im Gewichtsmittel ausgedrücktes Molekulargewicht von 100.000 bis 3,000.000 besitzt.

**3.** Zusammensetzung für Heißschmelzklebstoff, nach Anspruch 1 oder 2, dadurch gekennzeichnet, daß das klebrig machende Harz (B) ausgewählt ist aus der Gruppe bestehend aus den Polyterpenen, den Kolophoniumharzen und Harzestern sowie deren Wasserstoffverbindungen, den Polyvinylethern und den Petroleumharzen.

**4.** Zusammensetzung für Heißschmelzklebstoff, nach einem der Ansprüche 1 bis 3, dadurch gekennzeichnet, daß der Weichmacher (C) ausgewählt ist aus der Gruppe bestehend aus den semi-aliphatischen Ölen, den Polyisobutylenen mit sehr niedrigem Molekulargewicht, den aromatischen Erdölen, naphthenischen Ölen oder Paraffinölen, den Alkylbenzolen und den von gesättigten organischen Säuren abgeleiteten Estern.

**5.** Zusammensetzung für Heißschmelzklebstoff, nach einem der Ansprüche 1 bis 4, dadurch gekennzeichnet, daß sie außerdem auf 100 Gewichtsteile der Mischung (A) + (B) + (C) bis zu 40 Gewichtsteile mindestens eines mineralischen Füllstoffs enthält.

**6.** Zusammensetzung für Heißschmelzklebstoff, nach einem der Ansprüche 1 bis 5, dadurch gekennzeichnet, daß sie außerdem auf 100 Gewichtsteile der Mischung (A) + (B) + (C) bis zu 2 Teile mindestens eines Antioxidationsmittels enthält.

**7.** Zusammensetzung für Heißschmelzklebstoff, nach einem der Ansprüche 1 bis 6, dadurch gekennzeichnet, daß sie außerdem auf 100 Gewichtsteile der Mischung (A) + (B) + (C) bis zu 40 Gewichtsteile mindestens eines Polymers (D) enthält, das zumindest teilweise eine elastomere Eigenschaft aufweist und ausgewählt ist aus ($D_1$) den trisequentierten Polymeren auf Basis eines Styrolmonomers und eines Diens und aus ($D_2$) den Copolymeren, die 55 bis 85 Gew.-% an von Ethylen stammenden Einheiten und 15 bis 45 Gew.-% mindestens eines ungesättigten Comonomers enthalten, das ausgewählt ist aus den Alkyl(meth)acrylaten mit 4 bis 22 Kohlenstoffatomen und Vinylestern von Karbonsäuren mit 1 bis 22 Kohlenstoffatomen.

**8.** Verfahren zur Herstellung einer Zusammensetzung nach einem der Ansprüche 1 bis 7, dadurch gekennzeichnet, daß die Bestandteile der genannten Zusammensetzung bei einer Temperatur zwischen 180° und 220°C innig gemischt werden.

**9.** Verfahren nach Anspruch 8 zur Herstellung einer Zusammensetzung nach Anspruch 7, dadurch gekennzeichnet, daß im Zuge eines ersten Schrittes, der von kurzer Dauer ist und unter intensivem Rühren bei einer Temperatur zwischen 180° und 220°C ausgeführt wird, das Norbornenpolymer (A), sein Weichmacher (C) und zumindest ein Teil des klebrig machenden Harzes (B) gemischt werden, worauf das erhaltene homogene Gemisch abgekühlt wird, und daß danach im Zuge eines zweiten Schrittes, der von längerer Dauer ist als der erste und unter mäßigem Rühren bei einer Temperatur zwischen 110° und 140°C ausgeführt wird, das Polymer (D) und gegebenenfalls das restliche klebrig machende Harz (B) zugegeben wird.

**10.** Verfahren zum Verkleben von Materialien, dadurch gekennzeichnet, daß es darin besteht, auf die Oberfläche mindestens eines der Materialien wenigstens eine vorher auf eine Temperatur von 90° bis 200°C gebrachte Zusammensetzung nach einem der Ansprüche 1 bis 7 aufzutragen und dann das andere Material auf die genannte Oberfläche aufzubringen.

11. Verfahren zum Verkleben von Materialien, dadurch gekennzeichnet, daß die Zusammensetzung in einer Menge von 10 bis 200 g pro Quadratmeter Oberfläche verwendet wird.